(19) Europäisches Patentamt
European Patent Office
Office européen des brevets

(11) Numéro de publication: **0 325 881 B1**

(12) **FASCICULE DE BREVET EUROPEEN**

(45) Date de publication de fascicule du brevet: **09.09.92**

(51) Int. Cl.5: **C08G 77/38**, C08L 27/06, //(C08L27/06,83:06)

(21) Numéro de dépôt: **88420438.9**

(22) Date de dépôt: **29.12.88**

(54) **Diorganopolysiloxane à fonction benzylidène-3 camphre.**

(30) Priorité: **29.12.87 FR 8718509**

(43) Date de publication de la demande:
**02.08.89 Bulletin 89/31**

(45) Mention de la délivrance du brevet:
**09.09.92 Bulletin 92/37**

(84) Etats contractants désignés:
**AT BE CH DE ES FR GB GR IT LI LU NL SE**

(56) Documents cités:
**EP-A- 0 088 842**
**FR-A- 2 212 368**
**FR-A- 2 303 068**
**GB-A- 2 007 703**

(73) Titulaire: **RHONE-POULENC CHIMIE**
**25, quai Paul Doumer**
**F-92408 Courbevoie Cédex(FR)**

(72) Inventeur: **Canivenc, Edith**
**53, rue du Colombier**
**F-69007 Lyon(FR)**
Inventeur: **Forestier, Serge**
**16, Allée Ferdinand Buisson**
**F-74410 Claye-Souilly(FR)**
Inventeur: **Gay, Michel**
**11, rue Garibaldi**
**F-69006 Lyon(FR)**
Inventeur: **Lang, Gérard**
**44, avenue Lacour**
**F-95210 Saint Gratien(FR)**
Inventeur: **Richard, Hervé**
**48, rue de l'Hermitage**
**F-75020 Paris(FR)**

(74) Mandataire: **Fabre, Madeleine-France et al**
**RHONE-POULENC CHIMIE Direction des Brevets Secteur Spécialités Chimiques 25, quai Paul-Doumer**
**F-92408 Courbevoie Cédex(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

## Description

La présente invention concerne un diorganopolysiloxane à fonction benzylidène-3 camphre.

Il est déjà connu de modifier, dans la chaîne et/ou en bout de chaîne, par des groupements organiques fonctionnels divers, des diorganopolysiloxanes dans le but de conférer à ces polymères silicones, des propriétés spécifiques.

Un moyen commode d'introduire ces groupements organiques fonctionnels est d'effectuer une réaction d'hydrosilylation en présence d'une quantité catalytiquement efficace d'un catalyseur au platine d'un diorganopolysiloxane porteur d'au moins un groupement SiH sur un composé organique porteur d'une insaturation alcénique.

Comme documents illustrant cet art antérieur on peut par exemple citer :

- les brevets US-A-2 970 150 et US-A-4 160 775 décrivant l'addition d'alcool allylique ou méthallylique sur un silane ou diorganopolysiloxane porteur d'au moins un groupement SiH,
- les brevets US-A-3 767 690 et US-A-4 503 208 décrivant des diorganopolysiloxanes porteurs de groupes à fonction acrylate ou méthacrylate,
- le brevet US-A-4 640 967 décrivant des diorganopolysiloxanes porteurs de groupements époxy et/ou acrylate ou méthacrylate et leur réalisation comme composition de revêtement de fibres optiques,
- le brevet EP-A-0 088 842 décrivant des diorganopolysiloxanes porteurs de groupements benzophénone.

La présente invention a précisément pour objet de proposer de nouveaux diorganopolysiloxanes modifiés par des groupements organiques fonctionnels qui présentent d'une part un indice de réfraction élevé en vue de leur incorporation dans des composition de revêtement pour fibres optique et, d'autre part, conviennent comme lubrifiant des matières plastiques en particulier du PVC.

Elle concerne un effet un polymère diorganopolysiloxane modifié choisi parmi ceux de formule :

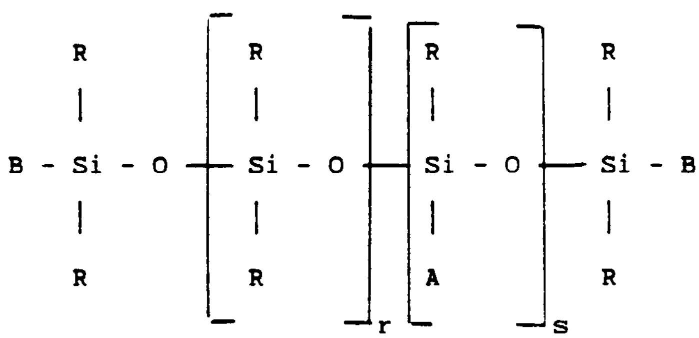

(1)

dans laquelle les symboles :

- R, identiques ou différents sont choisis parmi les radicaux alkyles en $C_1$-$C_{10}$, phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 0 et 200 inclusivement,
- s est un nombre entier choisi entre 0 et 50 inclusivement et si s est 0, au moins un des deux symboles B est A,

et de formule :

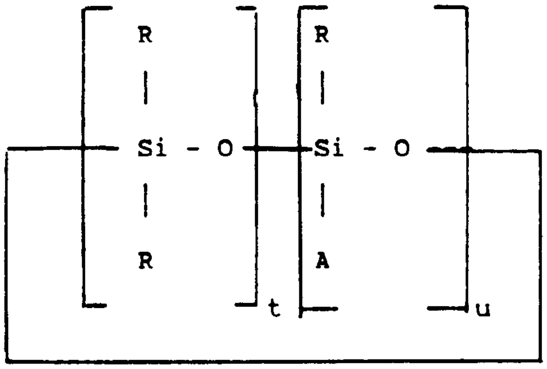

(2)

dans laquelle :

- R a la même signification qu'à la formule (1),
- u est un nombre entier compris entre 1 et 20 inclus,
- t est un nombre entier entre 0 et 20 inclus,
- t + u est égal ou supérieur à 3.

Formules dans lesquelles le symbole A est un radical de benzylidène - 3 camphre, de formule :

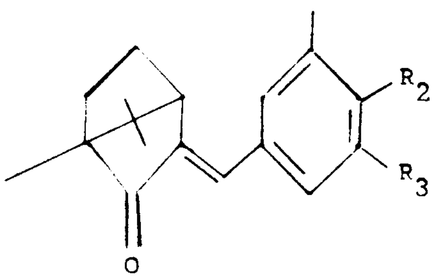

(3)

dans laquelle :

- $R_1$, $R_2$ représentent un atome d'hydrogène, un radical alkyle en $C_1$-$C_6$, un radical alcoxy en $C_1$-$C_6$, hydroxyle, triméthylsilyloxy, ou un radical divalent Y :

$$-(O)_n - (CH_2)_p - CH - CH_2 -$$

fixé au noyau benzénique par la terminaison $-(-O-)-_n$, l'un des deux radiaux $R_1$ et $R_2$ représente nécessairement le radical divalent Y,

- $R_4$ représente un atome d'hydrogène ou un radical alkyle en $C_1$-$C_4$,
- n est 0 ou 1.
- p est un nombre entier compris entre 1 et 10 inclus,
- $R_3$ représente un atome d'hydrogène, un radical alkyle en $C_1$-$C_6$ ou alcoxy en $C_1$-$C_6$.

On préfère plus particulièrement les polymères statistiques ou à blocs de formule (1) ou (2) présentant au moins l'une des caractéristiques suivantes :

- R est méthyle,
- B est méthyle,
- r est compris entre 5 et 20 inclus,
- s est compris entre 2 et 15 inclus,
- t + u est compris entre 3 et 10 inclus,
- $R_1$ est H ou méthoxy,
- p est compris entre 1 et 3 inclus,
- $R_2$ est H ou méthoxy,
- $R_3$ est H ou méthoxy.
- l'un des deux radicaux $R_1$ ou $R_2$ représentant le radical divalent Y dans lequel n = 0 ou 1, p = 1, $R_4$ = H ou méthyle.

Pour préparer les polymères de formules (1) et (2), on peut par exemple partir du polymère correspondant dans lequel tous les radicaux A sont des atomes d'hydrogène.

Ce polymère est dénommé par la suite polymère à SiH ; les groupes SiH peuvent être présents dans la chaîne et/ou aux extrémités de chaîne. Ces polymères à SiH sont des produits bien connus dans l'industrie des silicones et sont généralement disponibles dans le commerce.

Ils sont par exemple décrits dans les brevets américains US-A-3 220 972, US-A-3 697 473 et US-A-4 340 709.

Ce polymère à SiH peut être donc représenté par la formule :

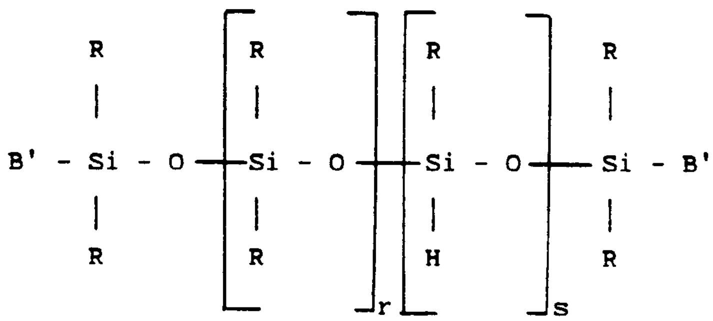

(4)

dans laquelle R, r et s ont la signification donnée ci-dessus pour la formule (1) et les radicaux B′, identiques ou différents, sont choisis parmi les radicaux R et un atome d'hydrogène,
et par la formule :

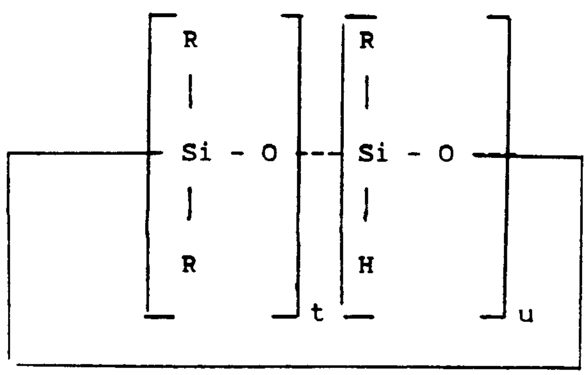

(5)

dans laquelle R, t et u ont la signification donnée ci-dessus pour la formule (2).

Sur ce polymère à SiH de formules (4) ou (5), on effectue une réaction d'hydrosilylation en présence d'une quantité catalytiquement efficace d'un catalyseur au platine sur un dérivé organique de benzylidène-3 camphre choisi parmi ceux de formule :

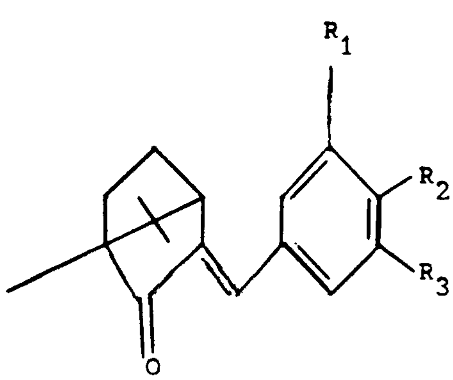

(6)

dans laquelle $R_1$, $R_2$ et $R_3$ ont la même signification qu'à la formule (3) ci-dessus sauf que le radical Y est alors le radical homologue insaturé Y′ monovalent de formule $-(O)_n-(CH_2)_p-C(R_4)=CH_2$ dans laquelle n, p et $R_4$ ont la même signification qu'à la formule (3).

Parmi les dérivés de formule (6) ci-dessus, on peut citer plus particulièrement :

a) - l'allyloxy-4′ benzylidène-3 camphre,
b) - l'allyloxy-4′ méthoxy-3′ benzylidène-3 camphre,
c) - le méthallyloxy-4′ benzylidène-3 camphre,
d) - le méthallyloxy-4′ méthoxy-3′ benzylidène-3 camphre,
e) - l'allyl-3′-méthoxy-4′-benzylidène-3 camphre,
f) - l'allyl-3′-diméthoxy-4′,5′-benzylidène-3 camphre,
g) - le méthallyl-3′-méthoxy-4′-benzylidène-3 camphre,
h) - le méthallyl-3′-diméthoxy-4′,5′-benzylidène-3 camphre,
i) - l'allyloxy-3′-méthoxy-4′-benzylidène-3 camphre,
j) - le méthallyloxy-3′-méthoxy-4′-benzylidène-3 camphre,
k) - l'allyl-4′-diméthoxy-3′,5′-benzylidène-3 camphre,
l) - le méthallyl-4′-diméthoxy-3′,5′-benzylidène-3 camphre.

Les dérivés de formule a) à d) sont décrits dans le brevet français FR-A-2 430 938 cité comme référence, en particulier la synthèse du dérivé a) est décrit à l'exemple 8 de ce brevet. Les homologues alcényloxy-4′ sont donc obtenus, en suivant l'enseignement de ce brevet, par réaction de l'halogénure d'alcényle correspondant sur le p-hydroxy-benzylidène-3 camphre correspondant en présence de carbonate de sodium dans le diméthylformamide.

Les dérivés e) à l) et leurs homologues alcényl-3′, alcényl-4′ et alcényloxy-3′, peuvent être préparés selon l'un des procédés suivants :

Premier procédé :

Préparation des composés de formule (6) dans laquelle $R_1$ représente un radical $-(O)_n-(CH_2)_p-C(R_4)=CH_2$ ou bien $R_2$ représente un radical $-(CH_2)_p-C(R_4)=CH_2$, où $R_1$, $R_2$, n, p, $R_4$ et $R_3$ ont les significations indiquées ci-dessus.

On condense un aldéhyde aromatique de formule (II) sur le camphre synthétique (d,l-camphre) ou le camphre naturel (d-camphre) selon le schéma réactionnel suivant :

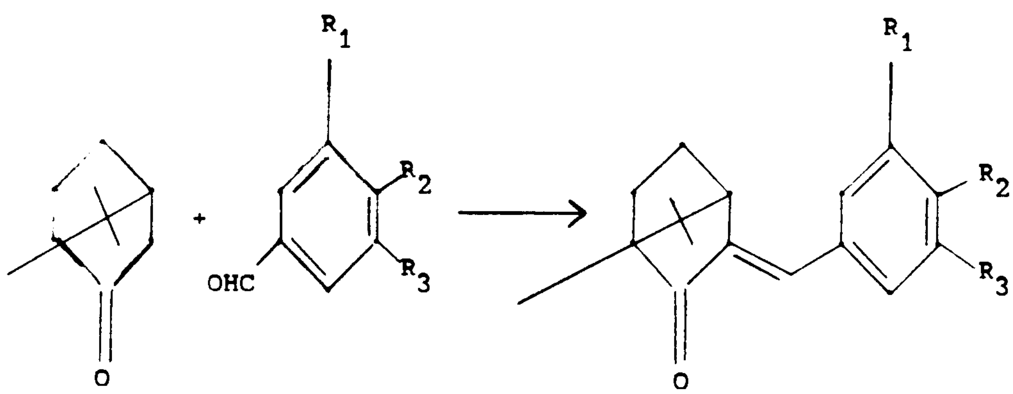

(II) (6)

Cette réaction est effectuée en présence d'une base, par exemple en présence d'un amidure, d'un hydrure ou d'un alcoolate de métal alcalin, dans un solvant inerte tel que le benzène, le toluène, l'éther, le dioxane ou le diméthoxy-1,2-éthane, à une température comprise entre 0 °C et le point d'ébullition du solvant.

a) l'aldéhyde de formule (II) dans laquelle $R_1$ représente un radical $-(O)_n-(CH_2)_p-C(R_4)=CH_2$ lorsque n = 1, peut être obtenu par réaction d'un halogénure d'alcényle de formule (III) sur un aldéhyde de formule (IIA) selon le schéma réactionnel suivant :

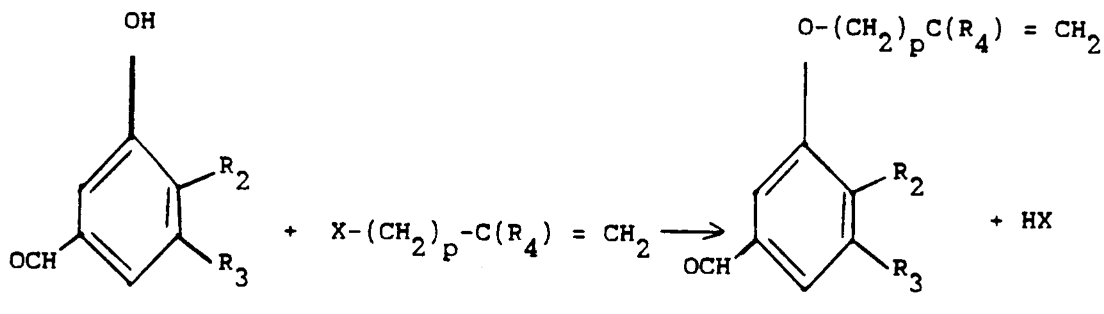

(IIA) (III) (II)

Cette réaction est effectuée en présence d'une base dans un solvant, par exemple en présence d'un carbonate ou hydroxyde de métal alcalin ou alcalino-terreux ou d'un amidure, hydrure ou alcoolate alcalin, dans un solvant compatible avec la nature de la base tel que l'eau ou un solvant organique comme le diméthylformamide, le diméthylsulfoxyde, le dioxanne ou un alcool, à une température comprise entre la température ambiante et le point d'ébullition du solvant.

Dans l'aldéhyde de formule (IIA), qui peut être préparé selon des méthodes connues, et dans l'aldéhyde de formule (II) dans laquelle $R_1$ représente un radical $-O-(CH_2)_p-C(R_4) = CH_2$, $R_2$ et $R_3$ représentent un atome d'hydrogène, un radical alkyle en $C_1$-$C_6$ ou un radical alcoxy en $C_1$-$C_6$. Dans le composé de formule (III), X représente un atome d'halogène, de préférence le chlore ou le brome, et $R_4$ et p ont les significations mentionnées ci-dessus.

b) l'aldéhyde de formule (II) dans laquelle $R_1$ représente un radical $-(O)_n-(CH_2)_p-C(R_4) = CH_2$ lorsque n = 0, ou dans laquelle $R_2$ représente un radical $-(CH_2)_p-C(R_4) = CH_2$, peut être obtenu par réaction de l'orthoformiate d'éthyle sur un bromure de phénylmagnésium de formule (IV), suivie d'une hydrolyse de l'acétal formé, selon le schéma réactionnel suivant :

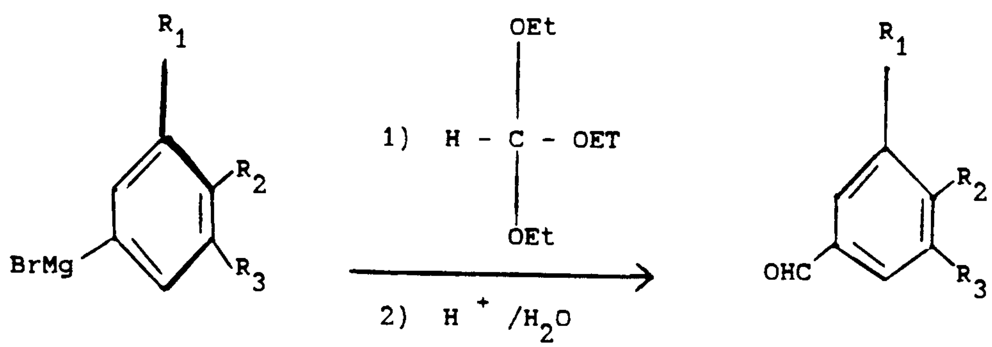


(IV) (IIB)

Cette réaction peut être effectuée dans les conditions décrites par QUELET (C.R. Acad. Science Vol. 182, p. 1 285 et Bull. Soc. Chim. Fr. vol. 45, p. 267), par exemple dans un solvant inerte tel que l'éther éthylique, le dioxanne ou le diméthoxy-1,2-éthane, à une température comprise entre la température ambiante et le point d'ébullition du solvant.

Dans les composés de formules (IIB) et (IV), l'un des substituants $R_1$ ou $R_2$ représente un radical $(CH_2)_p-C(R_4) = CH_2$, $R_4$ et p ayant la signification mentionnée ci-dessus, et l'autre représente un atome d'hydrogène, un radical alkyle en $C_1$-$C_6$ ou un radical alcoxy en $C_1$-$C_6$ et $R_3$ représente un atome d'hydrogène, un radicale alkyle en $C_1$-$C_6$ ou un radicale alcoxy en $C_1$-$C_6$.

- Deuxième procédé :

Préparation des composés de formule (6) dans laquelle $R_1$ représente un radical $-(O)_n-(CH_2)_p-C(R_4) = CH_2$ lorsque n est égal à 1 (composé IA).

Ces composés peuvent être obtenus par réaction d'un halogénure d'alcényle de formule (III) sur un

hydroxy-3′-benzylidène-3 camphre de formule (V), en présence d'une base par exemple en présence d'un hydroxyde ou carbonate de métal alcalin ou alcalino-terreux ou d'un amidure, alcoolate ou hydrure alcalin, dans un solvant compatible avec la nature de la base tel que l'eau ou un solvant organique tel qu'un alcool, le dioxanne, le diméthylsulfoxyde ou le diméthylformamide, à une température comprise entre la température ambiante et le point d'ébullition du solvant, selon le schéma réactionnel suivant :

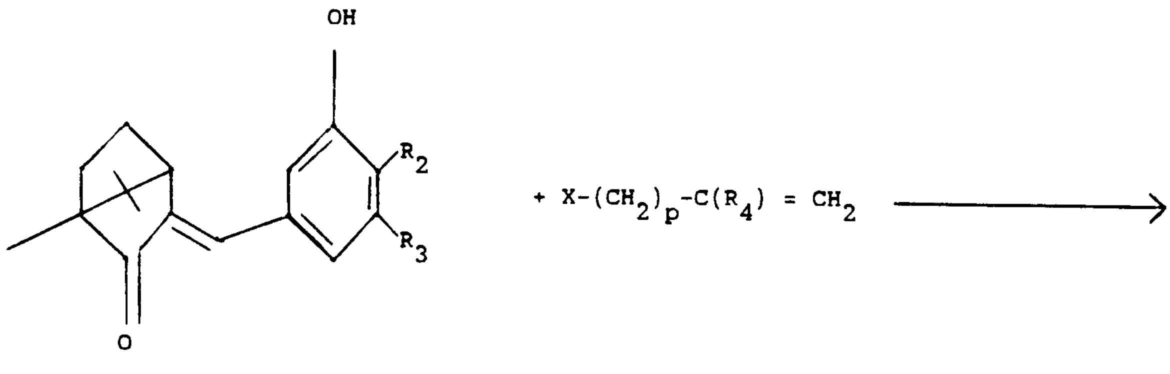


(V) (III)

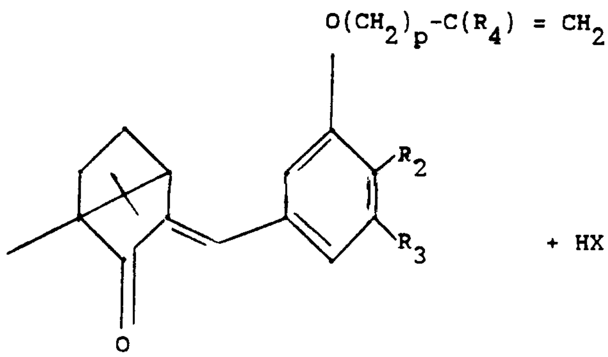


(IA)

Dans les composés de formules (V), (III) et (IA), $R_2$ et $R_3$ représentent un atome d'hydrogène, un radical alkyle en $C_1$-$C_6$ ou un radical alcoxy en $C_1$-$C_6$, $R_4$ et p ont la signification mentionnée ci-dessus et X représente un atome d'halogène, de préférence le chlore ou le brome.

Les composés de formule (V) peuvent être obtenus par hydrolyse acide des composés de formule (VI) dans laquelle $R_5$ représente un reste alkyle en $C_1$-$C_6$, de préférence un reste méthyle, et $R_2$ et $R_3$ désignent un atome d'hydrogène ou un radical alkyle ou alcoxy en $C_1$-$C_6$, selon le schéma réactionnel suivant :

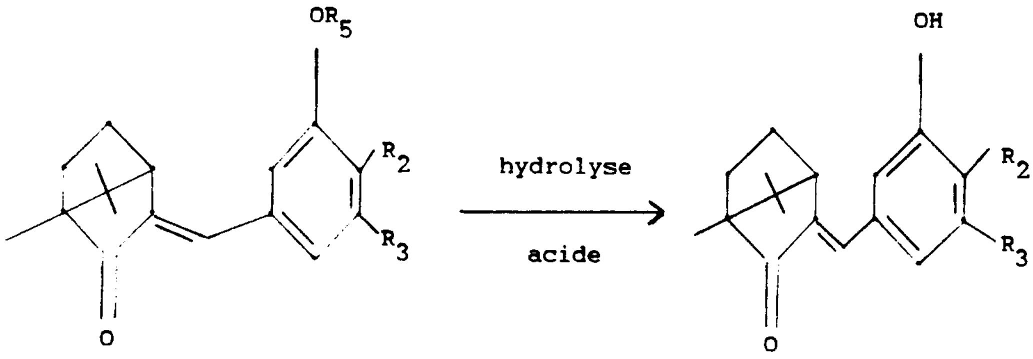


(VI) (V)

Cette hydrolyse peut être réalisée en présence d'un agent d'hydrolyse comme par exemple le chlorhydrate de pyridine, à une température voisine du point d'ébullition du mélange réactionnel.

Les composés de formule (V) peuvent également être préparés par condensation d'un aldéhyde de formule (IIA) sur le camphre synthétique (d,l-camphre) ou naturel (d-camphre), selon le schéma réactionnel suivant :

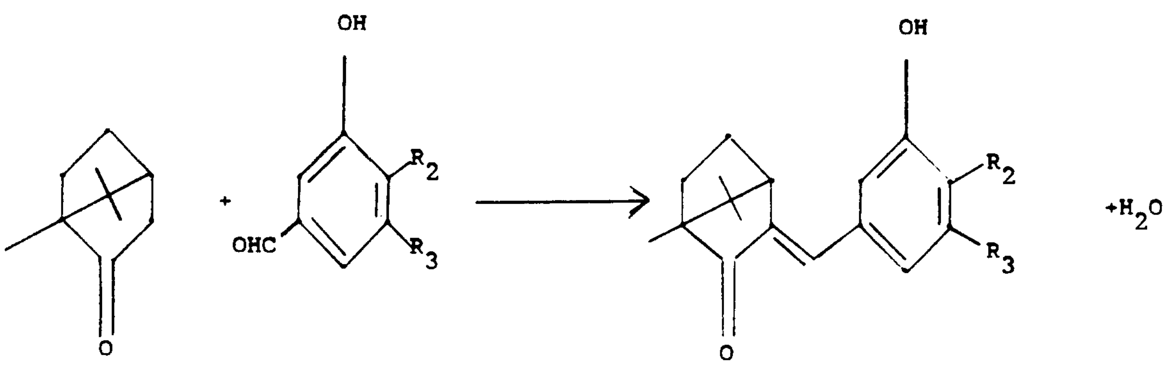

(IIA) (V)

$R_2$ et $R_3$ désignant un atome d'hydrogène, un radical alkyle ou alcoxy en $C_1$-$C_6$.

Cette réaction est effectuée en présence d'une base dans un solvant, par exemple au moyen d'hydrure de sodium ou de tertiobutylate de potassium dans le dioxanne ou le diméthoxy-1,2-éthane, à une température comprise entre la température ambiante et le point d'ébullition du solvant.

- Troisième procédé :

Préparation des composés de formule (6) dans laquelle $R_1$ représente un radical $-(O)_n-(CH_2)_p-C(R_4) = CH_2$ lorsque n = 0 et p = 1 : (composés ID).

Ces composés peuvent être obtenus par réarrangement de CLAISEN d'un composé de formule (IB) selon le schéma réactionnel ci-dessous :

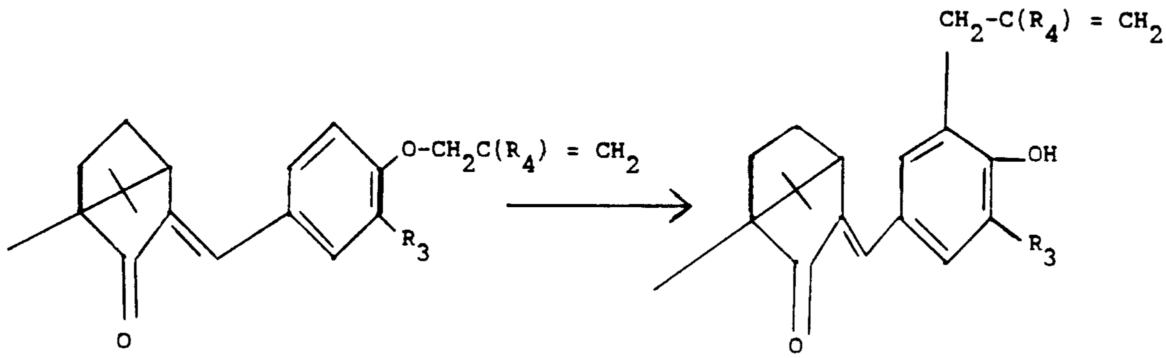

(IB) (IC)

Dans les composés (IB) et (IC), $R_3$ et $R_4$ ont les significations mentionnées ci-dessus.

Le composé (IB) peut être préparé de façon connue, en faisant réagir un hydroxy-4′-benzylidène-3 camphre, de formule (VII) sur un halogénure d'alcényle de formule (III) dans laquelle p = 1 selon le schéma :

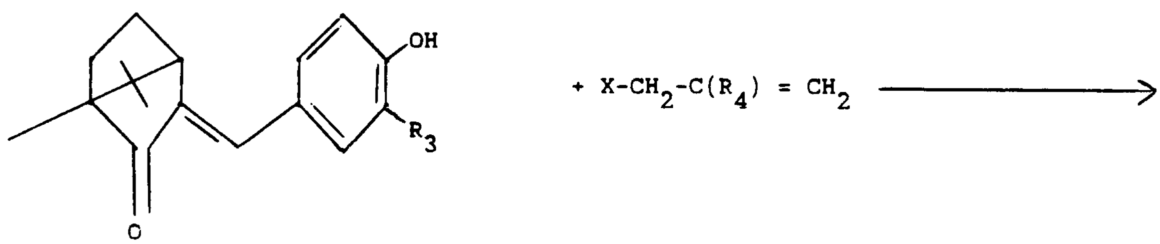

(VII) (III)

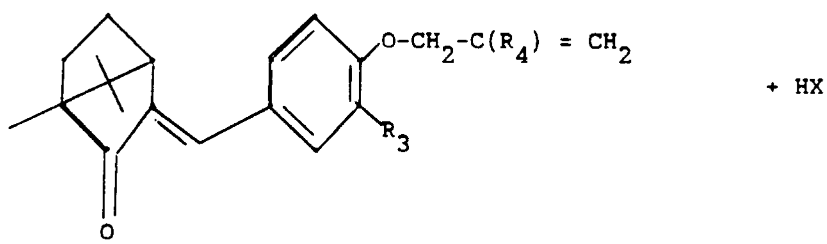

(IB)

$R_3$ et $R_4$ ayant les significations mentionnées ci-dessus et X étant un halogène, de préférence le chlore ou le brome. Cette réaction a lieu en présence d'une base, par exemple un carbonate ou hydroxyde de métal alcalin ou alcalino-terreux, un amidure, alcoolate ou hydrure alcalin, dans un solvant compatible avec la nature de la base tel que l'eau ou un solvant organique, par exemple un alcool, le dioxanne, le diméthylsulfoxyde ou le diméthylformamide, à une température comprise entre la température ambiante et le point d'ébullition du solvant.

Le réarrangement de CLAISEN peut être effectué dans les conditions décrites par TARBELL (Organic Reactions, Vol. 2, John WILEY, New-York, 1944, page 1), par chauffage à au moins 170 °C environ du composé de formule (IB), éventuellement en présence d'un solvant.

Le composé de formule (IC) ainsi obtenu est transformé en composé de formule (ID) dans laquelle $R_2$ représente un radical alcoxy en $C_1$-$C_6$ par réaction avec un halogénure d'alkyle en $C_1$-$C_6$ en présence d'une base, par exemple un carbonate de métal alcalin, dans un solvant tel que le diméthylformamide, ou

bien en présence d'un hydrure de métal alcalin dans le diméthoxy-1,2-éthane suivant le schéma réactionnel suivant :

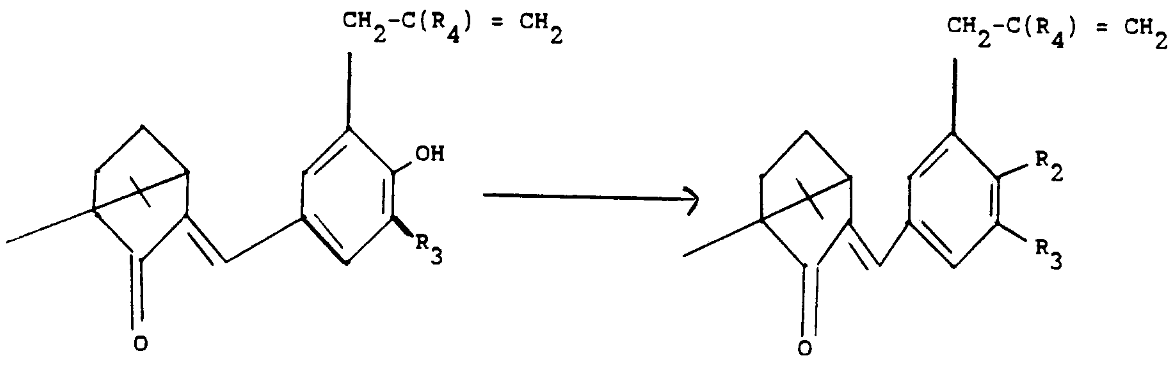

(IC) (ID)

Dans le composé (ID), $R_2$ représente un radical alcoxy en $C_1$-$C_6$ et $R_3$ et $R_4$ ont la signification mentionnée ci-dessus.

Les catalyseurs au platine utilisés pour réaliser la réaction d'hydrosilylation des polymères de formules (4) ou (5) sur le dérivé organique de formule (6) sont amplement décrits dans la littérature, on peut en particulier citer les complexes du platine et d'un produit organique décrit dans les brevets américains US-A-3 159 601, US-A-3 159 602, US-A-3 220 972 et les brevets européens EP-A-57 459, EP-A-188 978 et EP-A-190 530 et les complexes du platine et d'organopolysiloxane vinylé décrits dans les brevets américains US-A-3 419 593, US-A-3 715 334, US-A-3 377 432 et US-A-3 814 730.

Pour faire réagir le polymère à SiH de formules (4) ou (5) sur le dérivé de formule (6) on utilise généralement une quantité de catalyseur au platine calculée en poids de platine métal comprise entre 5 et 600 ppm, de préférence entre 10 et 200 ppm basés sur le poids de polymère à SiH de formules (4) ou (5).

La réaction d'hydrosilylation peut avoir lieu en masse ou au sein d'un solvant organique volatil tel que le toluène, l'heptane, le xylène, le tétrahydrofuranne et le tétrachloroéthylène.

Il est généralement souhaitable de chauffer le mélange réactionnel à une température de 60 à 120 °C pendant le temps nécessaire pour que la réaction soit complète. Par ailleurs il est souhaitable d'ajouter goutte à goutte le polymère à SiH sur le dérivé de formule (6) en solution dans un solvant organique.

On vérifie que la réaction est complète en dosant les SiH résiduels par la potasse alcoolique puis on élimine le solvant par exemple par distillation sous pression réduite.

L'huile brute obtenue peut être purifiée, par exemple par passage sur une colonne absorbante de silice.

Les polymères de formules (1) ou (2) présentent un indice de réfraction remarquablement élevé. Ils sont donc utilisables en particulier en mélange avec les compositions organiques ou organosiliciques utilisées pour enrober les fibres optiques, dans le cas où on recherche à obtenir un revêtement à indice de réfraction élevé.

Par ailleurs les polymères de formules (1) ou (2) sont de remarquables lubrifiants de diverses matières plastiques telles que : polyoléfines, polyesters et surtout PVC (polychlorure de vinyle) et permettent d'éviter le collage sur les outils et machines de mise en oeuvre de ces matières plastiques.

Pour cette dernière application on incorpore de 0,001 à 2 parties de polymère pour 100 parties de matière plastique avant sa mise en oeuvre.

Les exemples ci-après illustrent l'invention sans en limiter la portée.

- EXEMPLE 1 :

Dans un ballon tricol maintenu à 96 °C par un bain d'huile, muni d'une agitation centrale et d'un réfrigérant ascendant, on charge 110,8 g (0,374 mole) d'allyloxy-4′ benzylidène-3 camphre, préparé conformément à l'exemple 8 de FR-A-2 430 938, 160 g de toluène et 12 µl d'une solution dans l'hexane (à 8,45 % en poids de platine métal) d'un complexe de platine préparé à partir d'acide chloroplatinique et de divinyl-1,3 tétraméthyl-1,1,3,3 disiloxane comme décrit dans le brevet US-A-3 814 730.

On ajoute en une demi-heure 50 g d'un polymère statistique à SiH de formule :

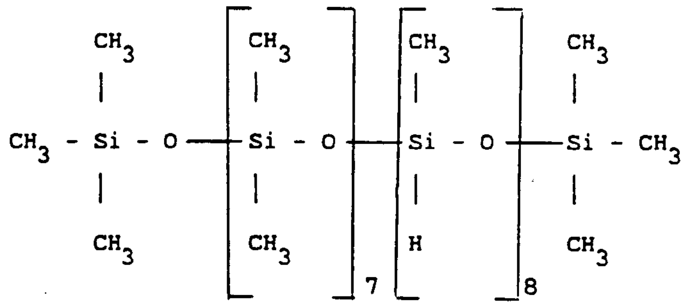

(1)

titrant 731,3 meq/100 g en fonction SiH (meq = milliéquivalent).

On vérifie, au bout de 10 heures de réaction par dosage des SiH résiduels au moyen de potasse butanolique, que le taux de transformation des fonctions SiH est de 99 %.

On obtient alors une huile limpide, légèrement jaune, de très forte viscosité, après avoir éliminé le toluène par distillation à 100 ° C sous pression réduite de 0,66 KPa.

Sur un échantillon de l'huile obtenue on effectue une analyse de Résonnance Magnétique Nucléaire du proton (RMN H) à 360 MHz dans $CDCl_3$ et on mesure les déplacements chimiques en ppm qui sont indiqués sur la formule ci-dessous :

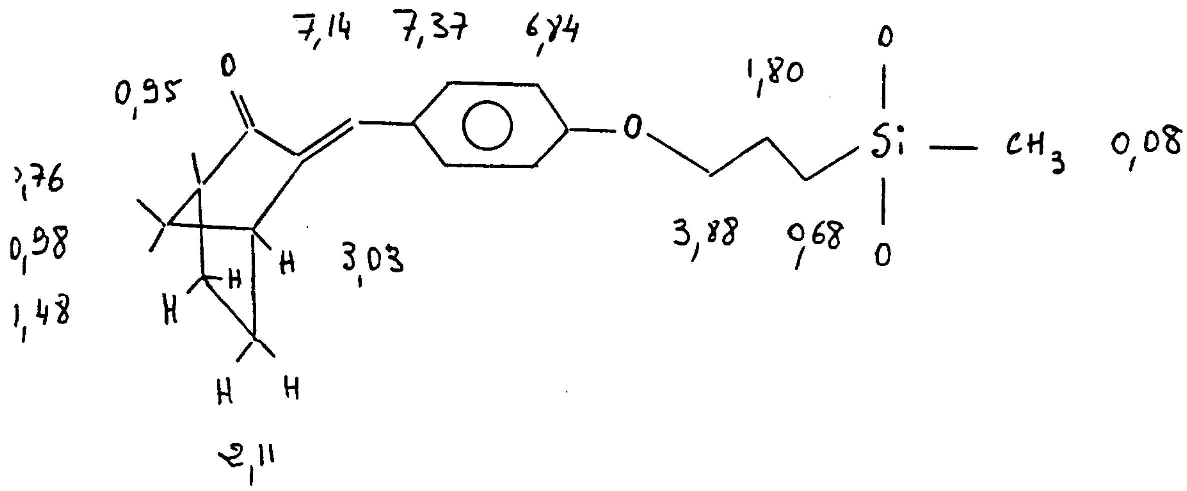

Le taux de dérivé de camphre de départ dans l'huile obtenue après élimination du solvant est de 6,4 % en poids.

L'élimination de ce dérivé est aisément effectuée par passage de l'huile sur une colonne de gel de silice (support Kieselgel ART 7 754, commercialisé par la Société MERCK) avec comme solvant d'élution du dérivé organique un mélange 95/5 en volume d'hexane/acétate de butyle et comme solvant d'élution de l'huile, l'acétate de butyle.

L'huile purifiée contient moins de $3.10^{-3}$ % en poids de dérivé de camphre de départ. Elle présente un indice de réfraction d'environ 1,542.

- EXEMPLE 2 :

Préparation de l'allyloxy-4′ méthoxy-3′ benzylidène-3 camphre.

On répète exactement le mode opératoire de l'exemple 8 du brevet français FR-A-2 430 938 sauf que l'on utilise comme produit de départ l'hydroxy-4′ méthoxy-3′ benzylidène-3 camphre. On obtient le produit désiré qui présente un point de fusion de 75 ° C.

On effectue ensuite exactement les mêmes opérations qu'à l'exemple 1 sauf que l'on utilise :

- 30,6 g d'allyloxy-4′ méthoxy-3′ benzylidène-3 camphre,
- 31 g de toluène,
- 3,4 µl de solution catalysante au platine,
- 12,5 g de polymère à SiH de formule :

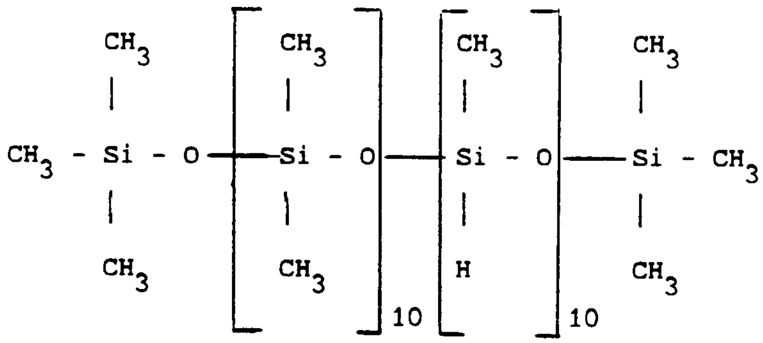

(1)

titrant 733,9 meq/100 g en fonction SiH (meq = milliéquivalent).

On obtient un taux de transformation des SiH de 99 % après 9 heures de réaction.

Après élimination du toluène, on isole 40,0 g d'huile légèrement jaune très visqueuse titrant 5,3 % en poids de dérivé de camphre de départ.

L'analyse RMN H donne l'enchaînement prévu :

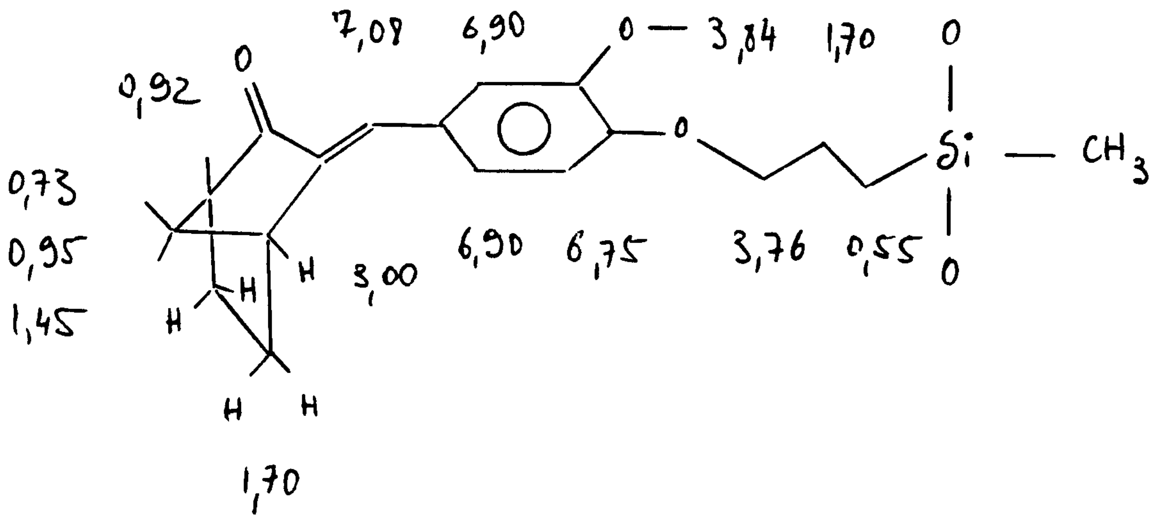

L'élimination du dérivé de camphre est effectuée de la même façon qu'à l'exemple 1 sauf que le solvant d'élution du dérivé de camphre est le dichlorométhane.

L'huile purifiée contient moins de $3.10^{-3}$ % en poids de dérivé de camphre et présente un indice de réfraction d'environ 1,540.

- EXEMPLE 3 :

3a - préparation de l'allyl-3′-methoxy-4′-benzylidène-3 camphre

1er stade :

Préparation de l'allyl-3′-hydroxy-4′-benzylidène-3 camphre

On chauffe pendant 24 heures sous agitation à 185° C, 296 g (1 mole) d'allyloxy-4′-benzylidène-3 camphre obtenu conformément à l'exemple 8 de FR-A 2 430 938.

Le mélange réactionnel refroidi est recristallisé dans l'éther éthylique. On obtient ainsi 270 g d'allyl-3′-hydroxy-4′-benzylidène-3 camphre possedant les caractéristiques suivantes :

- point de fusion : 150° C
- spectre RMN $^1H$ ($CDCL_3$) : spectre conforme à la structure attendue
- spectre (UV) ethanol

  $\lambda_{max}$ : 327 nm

ε : 22600

| - analyse élémentaire | | |
|---|---|---|
| calculé % :<br>trouvé % : | C : 81,04<br>C : 81,11 | H : 8,16<br>H : 8,18 |

2ème stade

Préparation de l'allyl-3′-methoxy-4′-benzylidène-3 camphre

On dissout 9 g (0,03 mole) d'allyl-3′-hydroxy-4′-benzylidène-3 camphre obtenu au premier stade ci-dessus dans 150 $cm^3$ de dimethoxy-1,2-éthane préalablement séché sur tamis moléculaire. On ajoute lentement 2,56 g d'hydrure de sodium et on chauffe à 60° C. On introduit goutte à goutte 8,52 g (0,06 mole) d'iodure de méthyle, puis on porte au reflux pendant 2 heures. Le solvant est évaporé et le résidu est repris par 50 $cm^3$ d'éther éthylique. La phase éthérée est lavée 2 fois à l'eau, puis séchée sur sulfate de sodium. Après évaporation du solvant, on récupère 8,8 g d'allyl-3′-méthoxy-4′-benzylidène-3 camphre, sous forme de cristaux blancs possédant les caractéristiques suivantes :

- point de fusion : 37° C
- spectre de RMN $^1H$ ($CDCl_3$) : spectre conforme à la structure attendue
- spectre UV (éthanol à 95°)
  λ max : 322 nm
  ε : 23600

| Analyse élémentaire | | | |
|---|---|---|---|
| Calculé % :<br>Trouvé % : | C : 81,25<br>C : 81,35 | H : 8,44<br>H : 8,60 | O : 10,31<br>O : 10,50 |

3b - préparation du polydiméthylsiloxane de formule :

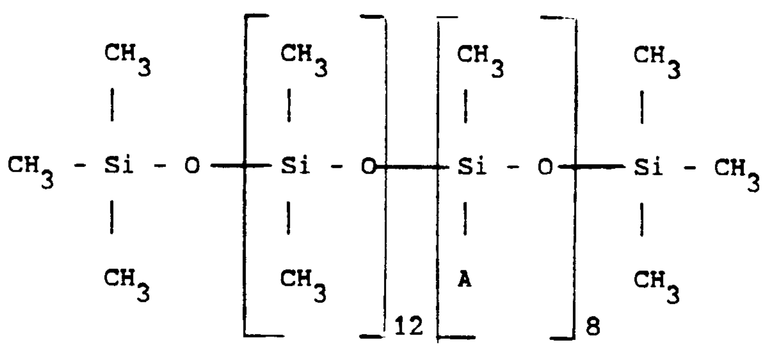

(1)

Ou A est le radical organique de formule :

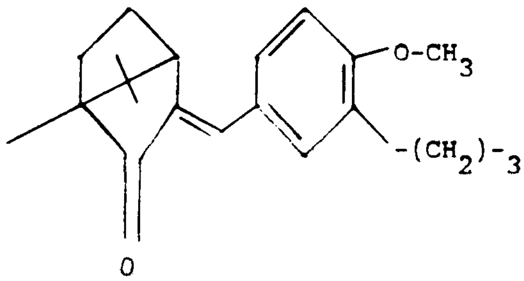

Dans un ballon tricol maintenu à 100° C par un bain d'huile, muni d'une agitation centrale et d'un réfrigérant ascendant, on charge 25 g (80,53 mmoles) d'allyl-3′-méthoxy-4′-benzylidène-3 camphre et 25 g de toluène.

Lorsque la température du milieu réactionnel est de 100° C, on introduit 1,60 microlitre d'une solution dans l'hexane (à 9,92 % en poids de platine métal) du complexe de platine utilisé à l'exemple 1 ci-dessus.

On ajoute alors en 1 heure 30 minutes 10,37 g d'un polymère statistique à SiH de formule :

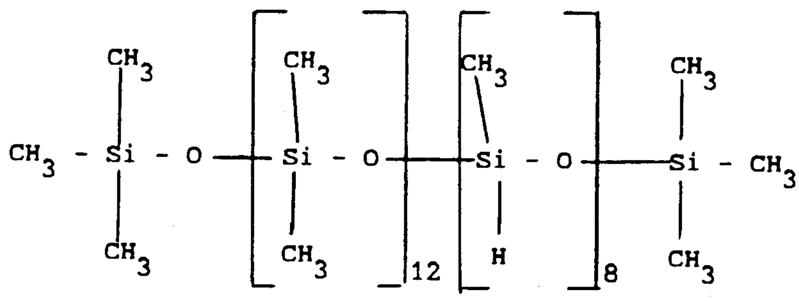

titrant 705,8 meq/100 g en fonction SiH.

Le taux de transformation des SiH est quantitatif après 11 heures de réaction.

Après élimination du toluène, on isole une huile jaune visqueuse titrant 11,7 % en poids de dérivé du camphre de départ.

L'analyse RMN[1]H donne l'enchaînement :

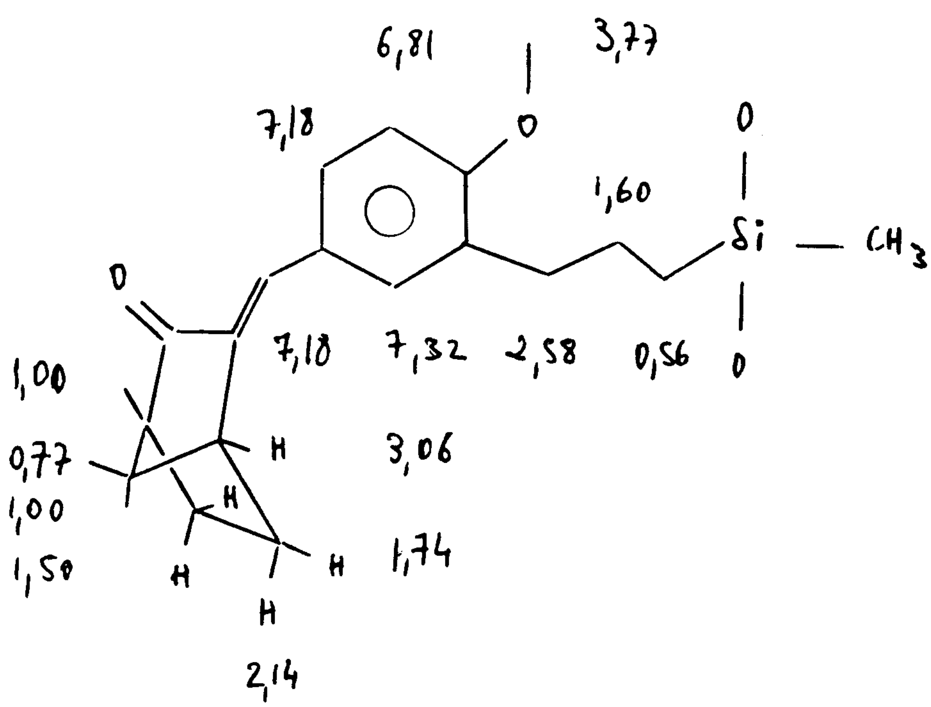

L'analyse RMN[29] Si à 49,7 $MH_z$ dans $CDCl_3$ + Fe $(Acac)_3$ est conforme à la structure attendue. L'élimination du dérivé de camphre de départ est effectuée de la même façon qu'à l'exemple 1. L'huile purifiée contient moins de $3.10^{-3}$ % en poids de dérivé de camphre départ.

## Revendications

**1.** Polymère diorganopolysiloxane modifié chosi parmi ceux de formule :

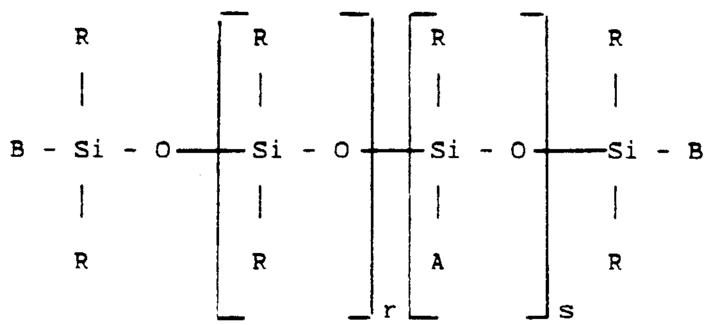

(1)

dans laquelle les symboles :

- R, identiques ou différents, sont choisis parmi les radicaux alkyle en $C_1$-$C_{10}$, phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 0 et 200 inclusivement,
- s est un nombre entier choisi entre 0 et 50 inclusivement et si s est 0, au moins un des deux symboles B est A,

et de formule :

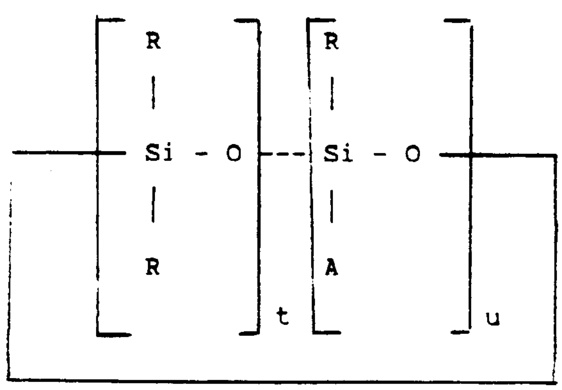

(2)

dans laquelle :

- R a la même signification qu'à la formule (1),
- u est un nombre entier compris entre 1 et 20 inclus,
- t est un nombre entier entre 0 et 20 inclus, et
- t + u est égal ou supérieur à 3.

Formules dans lesquelles le symbole A est un radical de benzylidène -3 camphre, de formule

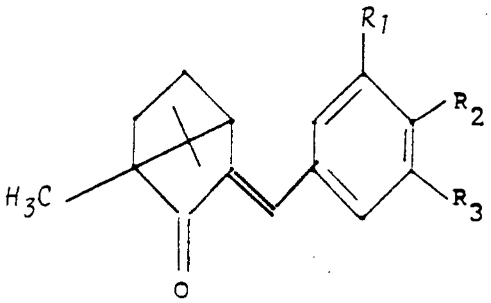

(3)

dans laquelle :

- $R_1$, $R_2$ représentent un atome d'hydrogène, un radical alkyle en $C_1$-$C_6$, un radical alcoxy en $C_1$-$C_6$, hydroxyle, triméthylsilyloxy, ou un radical divalent Y :

$$-(O)_n-(CH_2)_p-\underset{\displaystyle R_4}{\underset{|}{CH}}-CH_2-$$

fixé au noyau benzenique par la terminaison -(-O-)-$_n$, l'un des deux radicaux $R_1$ et $R_2$ représente nécessairement le radical divalent Y,
- $R_4$ représente un atome d'hydrogène ou un radical alkyle en $C_1$-$C_4$,
- n est 0 ou 1,
- p est un nombre entier compris entre 1 et 10 inclus,
- $R_3$ représente un atome d'hydrogène, un radical alkyle en $C_1$-$C_6$ ou alcoxy en $C_1$-$C_6$.

**2.** Polymère selon la revendication 1, caractérisé en ce qu'il présente en outre au moins l'une des caractéristiques suivantes :
- R est méthyle,
- B est méthyle,
- r est compris entre 5 et 20 inclus,
- s est compris entre 2 et 15 inclus,
- t + u est compris entre 3 et 10 inclus
- $R_1$ est H ou méthoxy,
- p est compris entre 1 et 3 inclus,
- $R_2$ est H ou méthoxy,
- $R_3$ est H ou méthoxy.

L'un des deux radicaux $R_1$ ou $R_2$ représentant le radical divalent Y dans lequel n = 0 ou 1, p = 1, $R_4$ = H ou méthyle.

**3.** Procédé de préparation d'un polymère tel que défini à la revendication 1 ou 2, caractérisé en ce qu'on effectue une réaction d'hydrosilylation en présence d'une quantité catalytiquement efficace d'un catalyseur au platine, d'un polymère à SiH de formule :

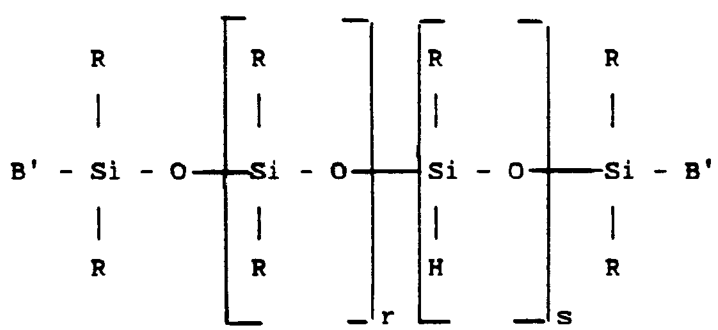

(4)

dans laquelle R, r et s ont la signification donnée ci-dessus pour la formule (1) et les radicaux B′, identiques ou différents, sont choisis parmi les radicaux R et un atome d'hydrogène,
et par la formule :

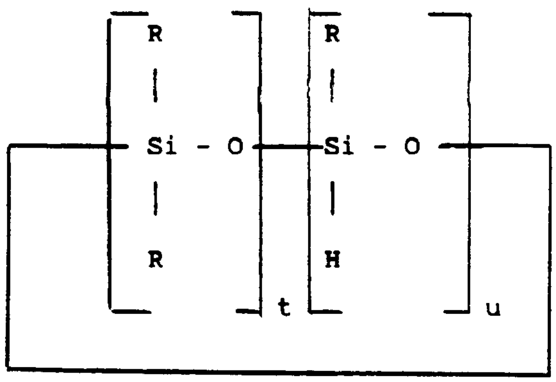

(5)

dans laquelle R, t et u ont la signification donnée ci-dessus pour la formule (2).
sur un dérivé organique de benzylidène-3 camphre choisi parmi ceux de formule :

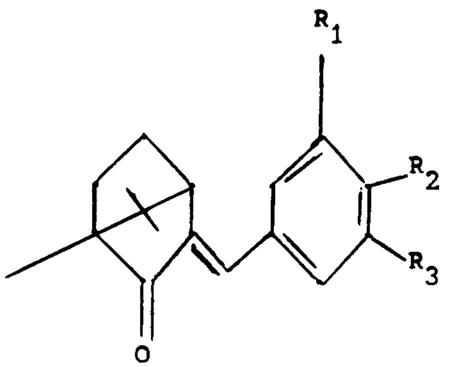

(6)

dans laquelle $R_1$, $R_2$ et $R_3$ ont la même signification qu'à la formule (3) ci-dessus sauf que le radical Y est alors le radical homologue insaturé Y′ monovalent de formule $-(O)_n-(CH_2)_p-C(R_4) = CH_2$ dans laquelle n, p et $R_4$ ont la même signification qu'à la formule (3).

**4.** Utilisation d'un polymère de formules (1) ou (2) tel que défini à la revendication 1 ou 2 comme lubrifiant du PVC.

**Claims**

**1.** Modified diorganopolysiloxane polymer chosen from those of formula:

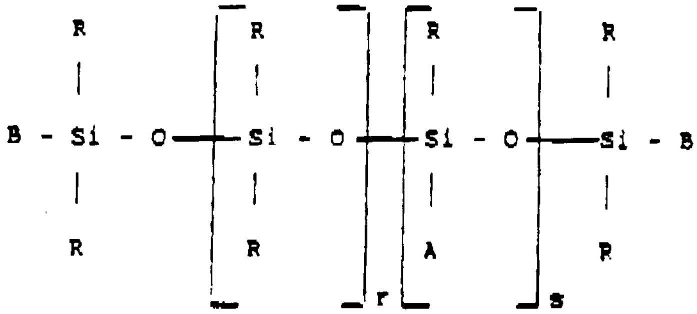

(1)

in which the symbols:

- R, which are identical or different, are chosen from $C_1$-$C_{10}$ alkyl, phenyl and 3,3,3-trifluoropropyl radicals, at least 80 % of the number of the radicals R being methyl,
- B, which are identical or different, are chosen from the radicals R and the radical A,
- r in an integer chosen between 0 and 200 inclusive,
- s is an integer chosen between 0 and 50 inclusive and, if s is 0, at least one of the two symbols B is A, and of formula:

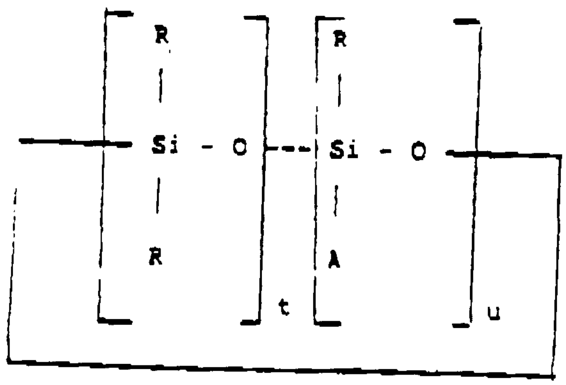

(2)

in which:

- R has the same meaning as in formula (1),
- u is an integer between 1 and 20 inclusive,
- t is an integer between 0 and 20 inclusive, and
- t + u is equal to or greater than 3.

Formulae in which the symbol A is a 3-benzylidenecamphor radical, of formula:

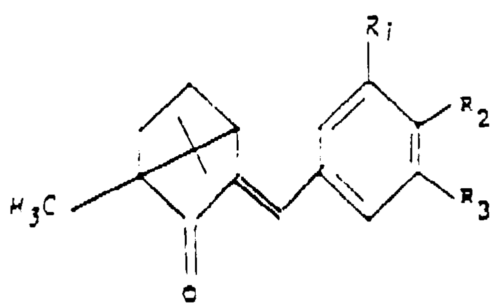

in which:

- $R_1$ and $R_2$ denote a hydrogen atom, a $C_1$-$C_6$ alkyl radical, a $C_1$-$C_6$ alkoxy, hydroxyl or trimethylsilyloxy radical, or a divalent radical Y :

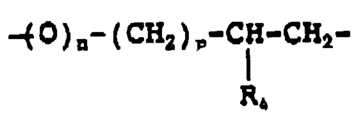

  attached to the benzene ring by the terminal group $-(-O-)_n$, one of the two radicals $R_1$ and $R_2$ necessarily denotes the divalent radical Y,
- $R_4$ denotes a hydrogen atom or a $C_1$-$C_4$ alkyl radical,
- n is 0 or 1,
- p is an integer between 1 and 10 inclusive, and
- $R_3$ denotes a hydrogen atom or a $C_1$-$C_6$ alkyl or $C_1$-$C_6$ alkoxy radical.

**2.** Polymer according to claim 1, characterised in that it additionally exhibits at least one of the following

characteristics:

- R is methyl,
- B is methyl,
- r is between 5 and 20 inclusive,
- s is between 2 and 15 inclusive,
- t + u is between 3 and 10 inclusive,
- $R_1$ is H or methoxy,
- p is between 1 and 3 inclusive,
- $R_2$ is H or methoxy, and
- $R_3$ is H or methoxy.

One of the two radicals $R_1$ or $R_2$ denoting the divalent radical Y in which n = 0 or 1, p = 1, and $R_4$ = H or methyl.

**3.** Process for the preparation of a polymer such as defined in claim 1 or 2, characterised in that a hydrosilylation reaction is carried out, in the presence of a catalytically effective quantity of a platinum catalyst, of a polymer containing SiH of formula:

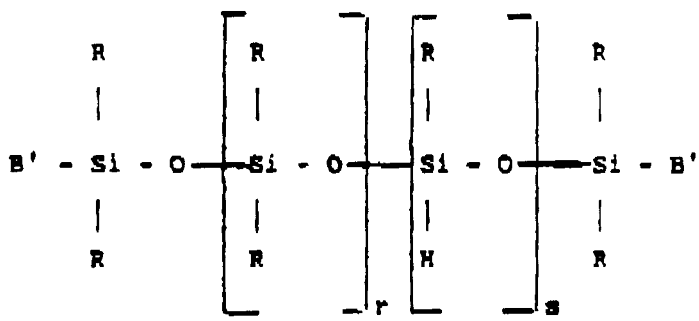

(4)

in which R, r and s have the meaning given above for formula (1) and the radicals B', which are identical or different, are chosen from radicals R and a hydrogen atom,
and by the formula:

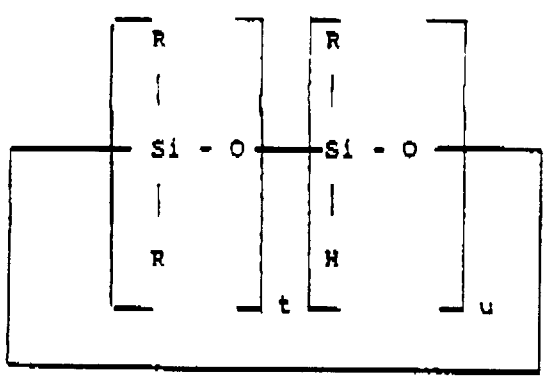

(5)

in which R, t and u have the moaning given above for formula (2)
with an organic derivative of 3-benzylidenecamphor chosen from those of formula:

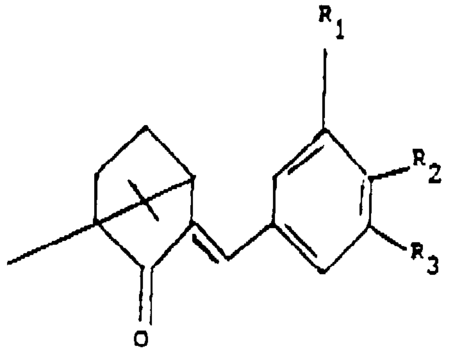

(6)

in which $R_1$, $R_2$ and $R_3$ have the same meaning as in formula (3) above, except that the radical Y is then the monovalent unsaturated homologous radical Y' of formula $-(O)_n-(CH_2)_p-C(R_4)=CH_2$ in which n, p and $R_4$ have the same meaning as in formula (3).

4. Use of a polymer of formulae (1) or (2) such as defined in claim 1 or 2 as a lubricant for PVC.

## Patentansprüche

1. Modifiziertes Diorganopolysiloxanpolymeres, ausgewählt unter denjenigen der Formel

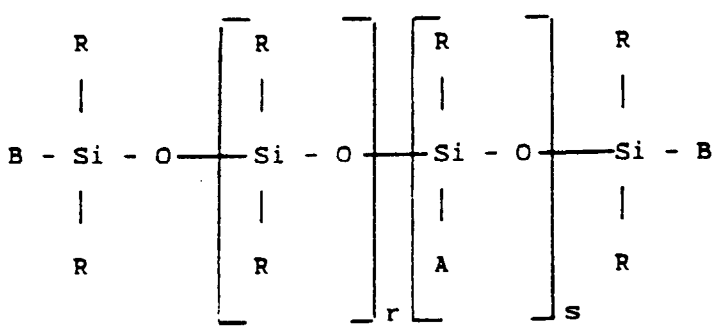

(1)

worin die Symbole

R, die gleich oder verschieden sind, unter den $C_{1-10}$-Alkyl-, Phenyl- und 3,3,3-Trifluorpropylresten ausgewählt sind, wobei zumindest 80% der Zahl der Reste R Methyl sind,

B, die gleich oder verschieden sind, unter den Resten R und dem Rest A ausgewählt sind,

r eine ganze Zahl zwischen 0 und 200 einschließlich bedeutet,

s eine ganze Zahl zwischen 0 und 50 einschließlich bedeutet und,wenn s für 0 steht, zumindest eines der beiden Symbole B für A steht,

und der Formel

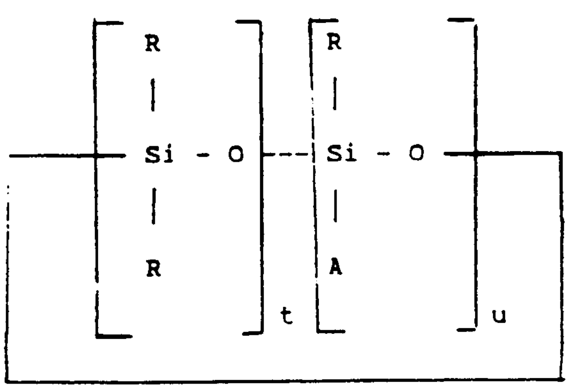

(2)

worin

R die für Formel (1) angegebene Bedeutung besitzt,
u eine ganze Zahl zwischen 1 und 20 einschließlich ist,
t eine ganze Zahl zwischen 0 und 20 einschließlich ist und
t + u gleich oder größer als 3 ist,

in welchen Formeln das Symbol A einen 3-Benzylidencampher-Rest der Formel

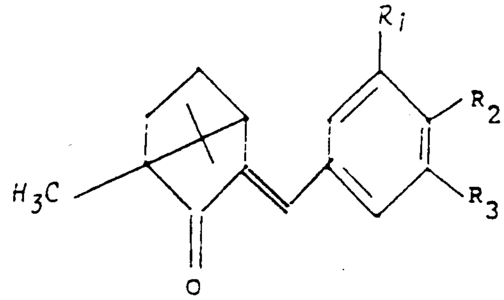

(3)

wiedergibt, worin

$R_1$ und $R_2$ ein Wasserstoffatom, einen $C_{1-6}$-Alkylrest, einen $C_{1-6}$-Alkoxyrest, einen Hydroxylrest, einen Trimethylsilyloxyrest oder einen zweiwertigen Rest Y:

$$-(O)_n-(CH_2)_p-\underset{R_4}{CH}-CH_2-,$$

der an den Benzolring durch die Endgruppe $-(-O-)_n-$ gebunden ist, bedeuten, wobei einer der beiden Reste $R_1$ und $R_2$ notwendigerweise den zweiwertigen Rest Y darstellt,

$R_4$ ein Wasserstoffatom oder einen $C_{1-4}$-Alkylrest bedeutet,
n für 0 oder 1 steht,
p eine ganze Zahl zwischen 1 und 10 einschließlich bedeutet,
$R_3$ ein Wasserstoffatom, einen $C_{1-6}$-Alkylrest oder einen $C_{1-6}$-Alkoxyrest wiedergibt.

**2.** Polymeres gemäß Anspruch 1, dadurch gekennzeichnet, daß es außerdem zumindest eines der folgenden Merkmale besitzt:

R ist Methyl,
B ist Methyl,
r beträgt zwischen 5 und 20 einschließlich,
s beträgt zwischen 2 und 15 einschließlich,
t + u beträgt zwischen 3 und 10 einschließlich,
$R_1$ ist H oder Methoxy,
p beträgt zwischen 1 und 3 einschließlich,
$R_2$ ist H oder Methoxy,
$R_3$ ist H oder Methoxy,

wobei einer der beiden Reste $R_1$ oder $R_2$ den zweiwertigen Rest Y wiedergibt, worin n = 0 oder 1, p = 1, $R_4$ = H oder Methyl.

**3.** Verfahren zur Herstellung eines Polymeren, wie in Anspruch 1 oder 2 definiert, dadurch gekennzeichnet, daß man eine Hydrosilylierungsreaktion in Gegenwart einer katalytisch wirksamen Menge eines Platinkatalysators, eines Polymeren mit SiH der Formel

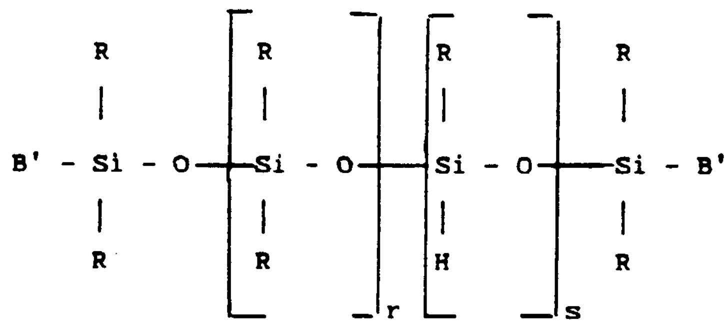

(4)

worin R, r und s die vorstehend für die Formel (1) angegebene Bedeutung besitzen und die Reste B', die gleich oder voneinander verschieden sind, unter den Resten R und einem Wasserstoffatom ausgewählt sind,
und der Formel

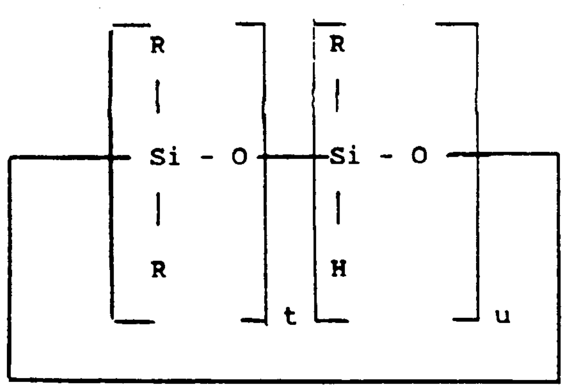

(5)

worin R, t und u die für die Formel (2) angegebene Bedeutung besitzen,
mit einem organischen 3-Benzyliden-campherderivat, ausgewählt unter denjenigen der Formel

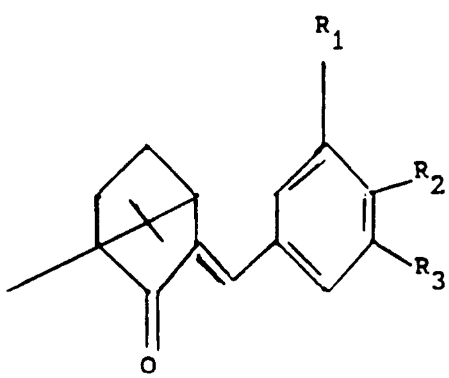

(6)

worin $R_1$, $R_2$ und $R_3$ die für Formel (3) angegebene Bedeutung besitzen, mit Ausnahme dessen, daß der Rest Y dann den ungesättigten, homologen, einwertigen Rest Y' der Formel $-(O)_n-(CH_2)_p-C(R_4)=CH_2$ bedeutet, worin n, p und $R_4$ die für Formel (3)angegebene Bedeutung besitzen, durchführt.

4. Verwendung eines Polymeren der Formel (1) oder (2), wie in Anspruch 1 oder 2 definiert, als Gleitmittel von PVC.